# EUROPEAN PATENT SPECIFICATION

(11) **EP 3 113 454 B1**
(45) Date of publication and mention of the grant of the patent: **26.12.2018**
(21) Application number: 16177518.4
(22) Date of filing: 01.07.2016
(51) Int. Cl.: H04L 29/08, G06F 3/06

(54) **NETWORK STORAGE DEVICE AND CONTROL METHOD AND PROGRAM FOR NETWORK STORAGE DEVICE**
NETZWERKSPEICHERVORRICHTUNG SOWIE STEUERUNGSVERFAHREN UND PROGRAMM FÜR EINE NETZWERKSPEICHERVORRICHTUNG
DISPOSITIF DE STOCKAGE DE RÉSEAU, PROCÉDÉ ET PROGRAMME DE COMMANDE POUR DISPOSITIF DE STOCKAGE DE RÉSEAU

(30) Priority: 02.07.2015 JP 2015133558
(43) Date of publication of application: 04.01.2017
(73) Proprietor: Buffalo Inc., Nagoya-shi, Aichi 460-8315 (JP)
(72) Inventor: MATSUMOTO, Naoki, Nagoya-shi, Aichi 460-8315 (JP)
(74) Representative: Epping - Hermann - Fischer

(56) References cited:
- EP-A1- 2 739 063
- EP-A1- 2 837 972
- US-A1- 2009 083 560
- US-A1- 2015 095 680
- US-B1- 6 604 201

## Description

### Technical Field

The present invention relates to a network storage device having a storage unit for storing data, and a control method and program for the network storage device.

### Background Art

Not only in designing industrial electric apparatuses but also in designing household electric appliance, ecologically conscious design (ecodesign) has been required. In these circumstances, the European Commission has officially issued the "Ecodesign Directive for Energy-related Products (ErP)" (hereinafter referred to as the ErP directive), thereby having required the ecodesign of all energy-related products. This ErP directive includes ecodesign requirements for electric power consumption in standby mode of electric household and office equipment, and requires the standby power consumption of such equipment to be not more than 0.5W if the equipment is deemed unoperated for a predetermined period of time (see European Commission Regulation No. 801/2013).

In order to implement the above-described ErP directive in a storage device actually storing data, an operation control procedure may be available in which, while the storage device is deemed continually used, the storage device keeps operating; whereas if it is deemed unused for a predetermined period of time, it stops operating.

Among network storage devices recently proposed and represented by Network Attached Storage (NAS), proposed is a network storage device which has two network interfaces. In such a network storage device one interface is connected to the internet through an external device such as a router, and the other interface is connected to a player for reading audio data stored in the network storage device, performing processing such as decoding on the audio data and performing a reproducing operation (see JP-A-2014-220606). This network storage device also serves as a bridge device for relaying various data when the player is connected to the internet.

In document US 2009/083560 A1 a method for determining power management of a computing device and connected devices is disclosed in order to contribute to power-saving consumption. The computing device having installed upon it software for computing device power management and includes a processor, a computer memory operatively coupled to the processor and a communications adapter operatively coupled to the processor and the computer memory. The communications adapter is configured for connecting the computing device through a network to a connected device.

However, in the case where this network storage device operates while complying with the above-described ErP directive, when the player is powered on, if a user tries to connect the player to the internet, the network storage device may stop operating. In this case, if the network storage device stops operating, since the network storage device cannot operate as a bridge device, even though the player requests connection to the internet based on an operation command from a user, the player cannot be connected to the internet.

### Summary of Invention

The present invention has been made in view of the above-described circumstances, and an object of the present invention is to provide a network storage device capable of appropriately controlling operations of network interfaces according to whether an external device is powered on or off, and a control method and program for the network storage device.

According to the present invention, there is provided a network storage device according to claim 1.

In the above network storage device, when the trigger to power off the network storage device is generated, the operation control unit may keep a power-on state of the network storage device if the detecting unit detects the power-on state of the external device connected through the first network interface.

In the above network storage device, when the trigger to power off the network storage device is generated, the operation control unit keep the first and second communication units and the relay unit operating if the detecting unit detects the power-on state of the external device connected through the first network interface and the setting holding unit holds the setting that the relay unit is to operate.

The above network storage device may further include an address setting unit which, when the detecting unit detects a shift from a power-off state to a power-on state of the external device connected through the first network interface, searches through the second network interface for an external device having a function of setting, to the external device connected through the first network interface, a network address capable of communication with the first network interface. The address setting unit may receive setting of a network address by the external device if the external device having the network address setting function is found, and the address setting unit may set a network address capable of communication with the first network interface to the external device connected through the first network interface if any external device having the network address setting function is not found.

Further, if the external device having the network address setting function is found, the address setting unit may switch the first network interface to a link-down state and switch the first network interface to a link-up state again, and then receive setting of a network address by the external device.

The above network storage device may further include a time measuring unit which starts to measure time when at least one of the first and second communication units stops operating, and which generates the trigger to power off the network storage device if the measured time reaches a predetermined time.

According to the present invention, there is provided a control method according to claim 7.

This control method may be a control method performed by the above network storage device.

According to the present invention, there is provided a program according to claim 9 which can be executed by a computer.

This program may be the program performed by the above network storage device. According to the present invention, it is possible to implement a network storage device capable of appropriately controlling the operations of network interfaces according to whether an external device is powered on or off, and a control method and program for the network storage device.

### Brief Description of Drawings

FIG. 1 is a block diagram illustrating a schematic configuration of a content reproducing system to which a network storage device according to an embodiment of the present invention is adopted.
FIG. 2 is a block diagram illustrating a schematic configuration of the network storage device of the embodiment.
FIG. 3 is a block diagram illustrating a schematic configuration of a reproducing device constituting the content reproducing system of the embodiment.
FIG. 4 is a functional block diagram illustrating the functional configuration of the network storage device of the embodiment.
FIGS. 5A to 5C are views for explaining exemplary operations of the content reproducing system of the embodiment.
FIGS. 6A and 6B are views for explaining other exemplary operations of the content reproducing system of the embodiment.
FIGS. 7A to 7C are views for explaining further exemplary operations of the content reproducing system of the embodiment.
FIG. 8 is a flow chart for explaining exemplary operations of the network storage device of the embodiment.
FIG. 9 is a flow chart for explaining other exemplary operations of the network storage device of the embodiment.
FIG. 10 is a view for explaining a restarting operation of the network storage device of the embodiment.

### Description of Embodiments

Hereinafter, an embodiment of the present invention will be described with reference to the accompanying drawings.

### (CONFIGURATION OF CONTENT REPRODUCING SYSTEM)

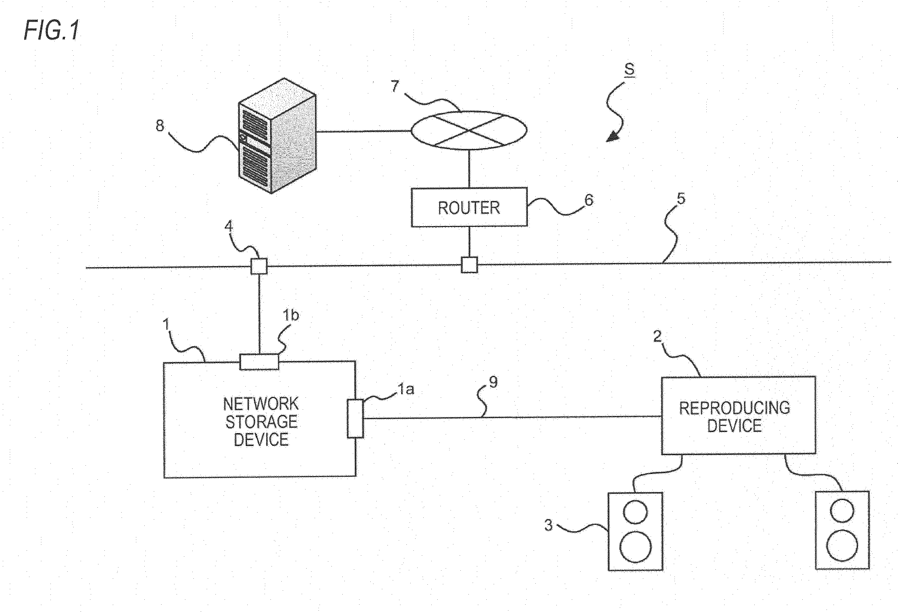

FIG. 1 is a view illustrating a schematic configuration of a content reproducing system which uses a network storage device according to an embodiment of the present invention. In FIG. 1, a content reproducing system S of the embodiment includes a network storage device 1 and a reproducing device (a player) 2.

The network storage device 1 has a storage unit storing content data, as will be described below in detail. Examples of the network storage device 1 include NAS and a personal computer (PC). Details of the network storage device 1 will be described below.

The following description will be made with reference to an example in which audio data is used as content data. However, content data which is stored in the network storage device of the present invention is not limited to audio data, but may be video data and still image data. Also, in the present invention, content data is stored together with other data in content files in the storage unit. Therefore, in the following description, content data and content files are synonyms unless they are specifically distinguished.

The reproducing device 2 reads content data from the storage unit of the network storage device 1, and performs processing such as decoding to convert the read content data into a music reproduction signal, transmits the music reproduction signal to a voice output device 3, such as a speaker, connected to the reproducing device 2, and reproduces the content data through the voice output device 3. The reproducing device 2 is, for example, a network audio player. Details of the reproducing device 2 will also be described below.

Each of the network storage device 1 and the reproducing device 2 is connected to a local area network (LAN) 5 through a relay device 4 such as a switching hub. The LAN 5 is connected to a wide area network (WAN) 7, such as the internet, through a router 6. Moreover, the network storage device 1 and the reproducing device 2 are connected directly to each other through a LAN cable 9.

More specifically, the network storage device 1 has a first network interface 1a and a second network interface 1b. The network storage device 1 is connected to the reproducing device 2 through the first network interface 1a. The network storage device 1 is also connected to the router 6 through the second network interface 1b.

Also, the network storage device 1 has the function of relaying communication between the reproducing device 2 and the WAN 7 connected to the first and second network interfaces 1a, 1b, as will be described below in detail. This makes it possible for the reproducing device 2 to perform data communication with an external server 8 existing on the WAN 7 through the network storage device 1.

### (CONFIGURATION OF NETWORK STORAGE DEVICE)

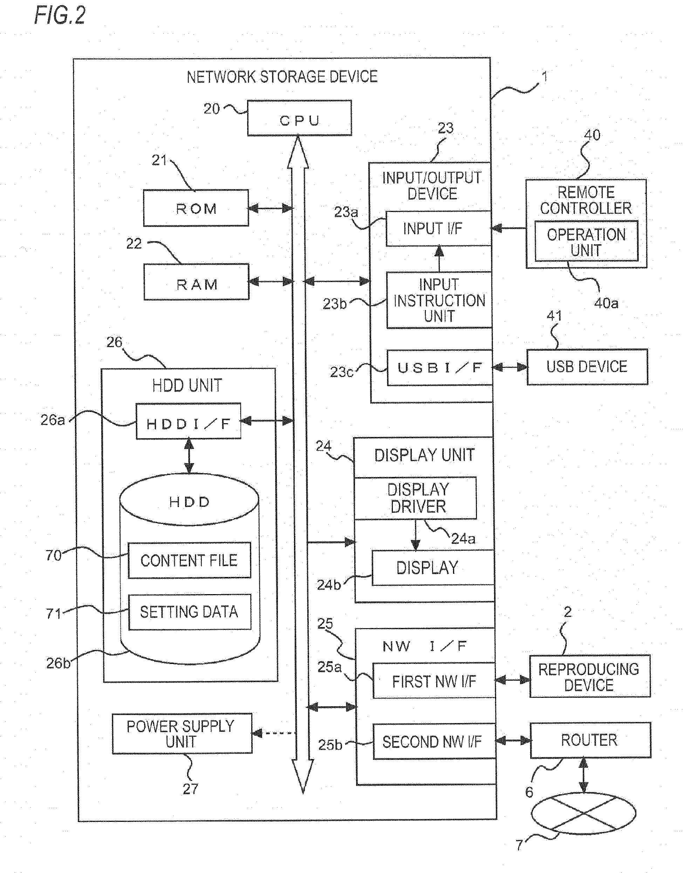

FIG. 2 is a block diagram illustrating a schematic configuration of the network storage device 1 according to the embodiment of the present invention. As shown in FIG. 2, the network storage device 1 of the present embodiment includes a central processing unit (CPU) 20, a read only memory (ROM) 21, a random access memory (RAM) 22, an input/output device 23, a display unit 24, a network interface (I/F) 25, a HDD (hard disk drive) unit 26, and a power supply unit 27, and these components such as the CPU 20, except for the power supply unit 27, are connected to one another by a bus.

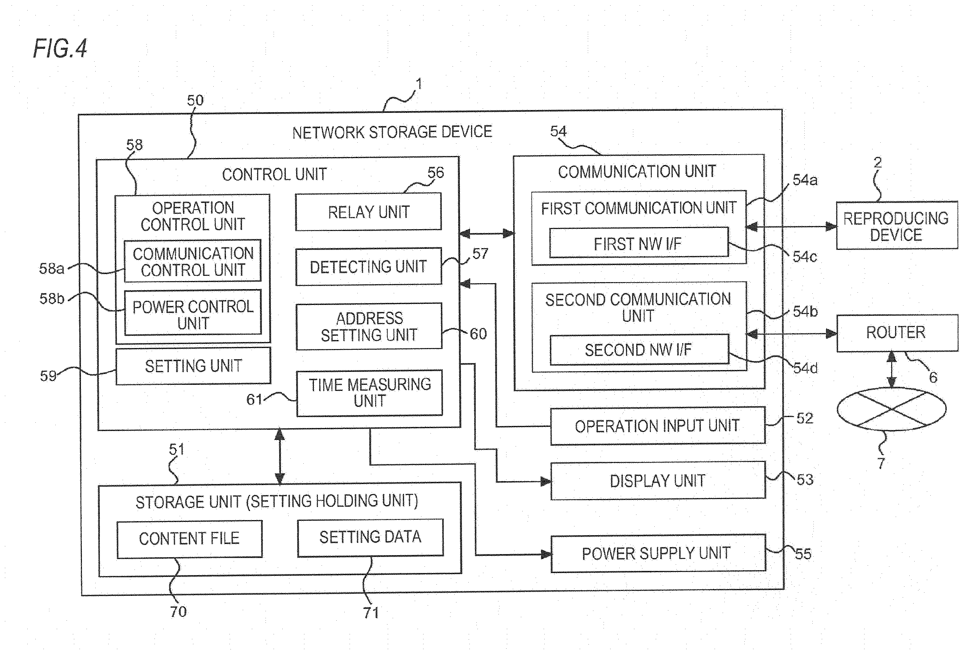

The CPU 20 controls the whole of the network storage device 1 by executing programs such as firmware stored in the ROM 21 (described below). Also, the CPU 20 operates as each of function units as shown in FIG. 4, by executing programs stored in the ROM 21. Operations of the individual function units shown in FIG. 4 will be described below. In the ROM 21, the above-described programs such as firmware are stored in advance. The RAM 22 serves as a work memory of the network storage device 1. In this RAM, programs, data, and the like which are temporarily when the network storage device 1 including the CPU 20 operates are stored.

The input/output device 23 includes an input interface (I/F) 23a, an input instruction unit 23b, and a USB interface (I/F) 23c.

The input interface 23a is connected to the input instruction unit 23b and a remote controller 40, and receives an input signal based on a user's operation on the input instruction unit 23b or the remote controller 40. For example, in the case where the network storage device 1 is NAS, the input instruction unit 23b may include various buttons for issuing various instructions such as a file acquisition instruction, an external device removal instruction, an operation state display instruction, a network storage device reset instruction, and instructions for powering on or off the network storage device 1. The remote controller 40 has operation units 40a including a plurality of buttons and the like, which correspond to operation positions and can be operated by a user. If the user operates at least one operation unit 40a, the remote controller 40 outputs an input signal corresponding to the operated operation unit 40a.

The USB interface 23c has a USB connector (not shown), and read data from or writes data in, a USB device 41 connected to the USB connector directly or through a USB hub and USB cables, or reads data from the USB device, according to the specification of USB 2.0, USB 3.0, or USB 3.1. Examples of the USB device 41 include various devices, such as an HDD device and a keyboard, each of which has a USB flash memory and a USB interface.

The display unit 24 includes a display 24b, and a display driver 24a for driving the display 24b. The display 24b is, for example, a liquid crystal display or an organic electro luminescence display, and is installed such that the screen of the display is exposed from the network storage device 1. If data to be displayed on the screen of the display 24b is supplied from the CPU 20 to the display driver 24a, the display driver 24a drives the display 24b such that the display 24b performs desired display on the screen.

The network interface 25 includes a first network interface 25a and a second network interface 25b. The first and second network interfaces 25a, 25b have input/output ports (not shown), and network connectors (not shown) corresponding to the input/output ports, and the reproducing device 2 and the router 6 are connected to the network connectors through network cables (not shown).

Therefore, the network storage device 1 can perform data communication with the reproducing device 2 through the network interface 25. Further, since the router 6 is connected to the WAN 7, the network storage device 1 can perform data communication with an external network. Moreover, the network interface 25 relays communication between the reproducing device 2 and the router 6 connected respectively to the first network interface 25a and the second network interface 25b.

The network interface 25 performs wired communication in compliance with, for example, the IEEE802.3 standard. The number of network interfaces which are included in the network interface 25 is not limited. For example, the network interface 25 may include three or more network interfaces.

The HDD unit 26 includes an HDD 26b and an HDD interface (I/F) 26a. The HDD 26b includes a disk (not shown) which is a recording medium, a rotator (not shown) for rotating the disk, and a head unit (not shown) for writing data on the disk or reading data from the disk. If a command for writing data on the disk 26b or reading data from the disk is issued, the HDD interface 26a controls the whole of the HDD 26b while performing data write or read control. If any data is read, the HDD interface outputs the read data. Also, in the HDD 26b, content files 70 and setting data 71 are stored. In FIG. 2, only one content file 70 is shown. However, in the present embodiment, a plurality of content files 70 may be stored in the HDD 26b.

The power supply unit 27 is connected to the external commercial power source (not shown), and supplies the power source voltage for operations of the individual components of the network storage device 1. In the present embodiment, for example, based on an instruction from the input/output device 23, the power supply unit 27 supplies electric power to the individual components (power-on state) or does not supply electric power to the components (power-off state) according to a command from the CPU 20.

### (CONFIGURATION OF REPRODUCING DEVICE)

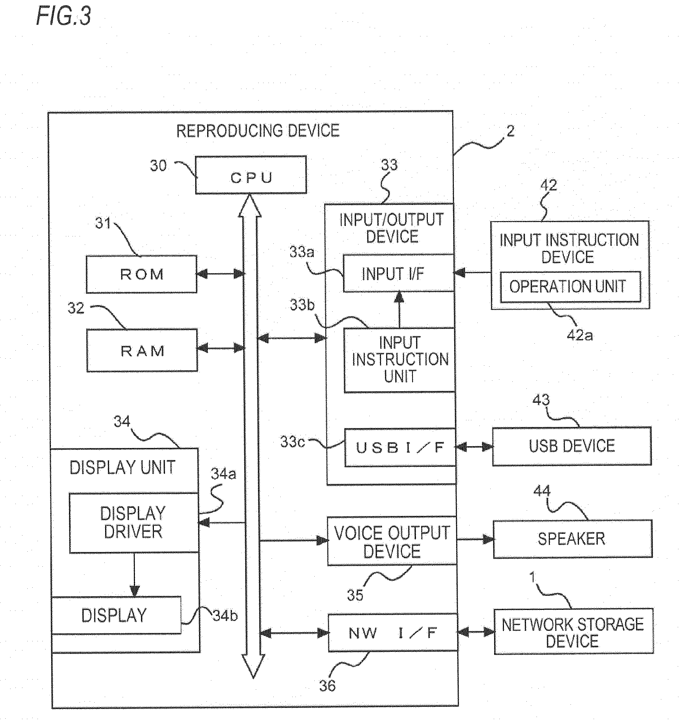

FIG. 3 is a block diagram illustrating a schematic configuration of the reproducing device 2 which is used in the network storage device 1 according to the embodiment of the present invention. As shown in FIG. 3, the reproducing device 2 of the present embodiment includes a CPU 30, a ROM 31, a RAM 32, an input/output device 33, a display unit 34, a voice output device 35, and a network interface (I/F) 36, and these components are connected to one another via a bus.

The CPU 30 controls the entire reproducing device 2 by executing programs such as firmware stored in the ROM 31 (described below). Also, the CPU 30 operates as each of function units as shown in FIG. 4, by executing programs stored in the ROM 31. Operations of the individual function units shown in FIG. 4 will be described below. In the ROM 31, the above-described programs such as firmware are stored in advance. The RAM 32 serves as a work memory of the reproducing device 2. In this RAM, programs, data, and the like which are temporarily used when the reproducing device 2 including the CPU 30 operates, and the content files 70 transmitted from the network storage device 1 are stored.

The input/output device 33 includes an input interface (I/F) 33a, an input instruction unit 33b, and a USB interface (I/F) 33c.

The input interface 33a is connected to the input instruction unit 33b and an input instruction device 42, and receives an input signal based on a user's operation on the input instruction unit 33b or the input instruction device 42. For example, in the case where the reproducing device 2 is a network audio player, the input instruction unit 33b may include various buttons for issuing various instructions such as an instruction for displaying the list of the content files 70, an instruction for reproducing the content files 70, and instructions for powering on or off the reproducing device 2. The input instruction device 42 has a plurality of operation units 42a, which correspond to operation positions and can be operated by a user. If the user operates at least one operation unit 42a, the input instruction device 42 outputs an input signal corresponding to the operated operation unit 42a. Examples of the input instruction device 42 include a remote controller, a keyboard, and a mouse, and examples of the operation units 42a include buttons of the remote controller and the like.

The USB interface 33c has a USB connector (not shown), and writes data in a USB device 43 connected to the USB connector directly or through a USB hub and USB cables, or reads data from the USB device, according to the specification of USB 2.0, USB 3.0, or USB 3.1. Examples of USB device 43 include various devices, such as an HDD device, each of which has a USB flash memory and a USB interface.

The display unit 34 includes a display 34b, and a display driver 34a for driving the display 34b. The display 34b is, for example, a liquid crystal display or an organic electro luminescence display, and is installed such that the screen of the display is exposed from the reproducing device 2. If data to be displayed on the screen of the display 34b is supplied from the CPU 30 to the display driver 34a, the display driver 34a drives the display 34b such that the display 34b performs desired display on the screen.

The voice output device 35 is connected to a speaker 44. If content data having a predetermined format is input to the voice output device 35, the voice output device outputs a music reproduction signal to the speaker 44 according to the input content data, whereby the content data is reproduced through the speaker 44.

The network interface 36 has an input/output port (not shown), and a network connector (not shown) corresponding to the input/output port, and the network storage device 1 is connected to the network connector through a network cable (not shown). Therefore, the reproducing device 2 can perform data communication with the network storage device 1 through the network interface 36. The network interface 36 performs wired communication based on, for example, the IEEE802.3 standard.

### (FUNCTIONAL CONFIGURATION OF NETWORK STORAGE DEVICE)

FIG. 4 is a functional block diagram illustrating the functional configuration of the network storage device 1 of the embodiment. As shown in FIG. 4, the network storage device 1 of the present embodiment includes a control unit 50, a storage unit 51, an operation input unit 52, a display unit 53, a communication unit 54, and a power supply unit 55.

The control unit 50 controls the entire network storage device 1. Particularly, the control unit 50 has the function of driving the network storage device 1 to operate as a Windows (trademark) file server. To operate the network storage device as a Windows file server, Samba, for example, may be actuated on the control unit 50. The control unit 50 includes a relay unit 56, a detecting unit 57, an operation control unit 58, a setting unit 59, an address setting unit 60, and a time measuring unit 61.

The relay unit 56 relays communication between an external device which is connected through a first communication unit 54a constituting the communication unit 54, and another external device which is connected through a second communication unit 54b. In the present embodiment, the relay unit 56 relays communication between the reproducing device 2 and the router 6.

More specifically, based on the setting data 71 held in the storage unit 51 operating as a setting holding unit, the relay unit 56 of the present embodiment determines whether to perform a relaying operation. In the case where the setting data 71 stored in the storage unit 51 designates the relaying operation, the relay unit 56 performs the relaying operation. More specifically, the relay unit 56 acquires the MAC (media access control) addresses of the devices (in the present embodiment, the reproducing device 2 and the router 6) connected to the first and second communication units 54a, 54b, and generates a MAC address list. Thereafter, if a broadcast frame is received through any one of the first and second communication units 54a, 54b, the relay unit 56 sends out the received broadcast frame though the other one of the first and second communication units 54a, 54b.

Also, in a case where a unicast frame (a frame including the MAC address of a specific device as a destination) is received through any one of the first and second communication units 54a, 54b, if the MAC address which is the destination is included in a list generated with respect to the other one of the first and second communication units 54a, 54b, the relay unit 56 sends out the received unicast frame through the other one of the first and second communication units 54a, 54b.

On the other hand, if the setting data 71 stored in the storage unit 51 does not indicate that the relay unit 56 is to perform any relaying operation, the relay unit 56 does not perform any relaying operation. More specifically, if a broadcast frame is received through any one of the first and second communication units 54a, 54b, the relay unit 56 processes the received broadcast frame, without sending out the received broadcast frame through the other one of the first and second communication units 54a, 54b.

Also, if a unicast frame is received through any one of the first and second communication units 54a, 54b, the relay unit 56 refers to the MAC address which is the destination of the received unicast frame. If the MAC address referred as the destination is a MAC address set for one of the first and second communication units 54a, 54b having received the referred unicast frame, the relay unit 56 receives and processes the corresponding unicast frame. On the other hand, if the MAC address which is the destination is not a MAC address set for one of the first and second communication units 54a, 54b having received the referred unicast frame, the relay unit 56 discards the corresponding unicast frame.

The detecting unit 57 detects the power-on state of the external device connected through the first communication unit 54a. In the present embodiment, the detecting unit 57 detects the power-on state of the reproducing device 2. The method by which the detecting unit 57 detects the power-on state of the reproducing device 2 is arbitrary, and may be appropriately selected from known detecting methods. For example, the detecting unit 57 may determine whether the input/output port (not shown) of the first communication unit 54a is in the link up state, in other words, in a state where communication using Layer 2 of the OSI reference model is possible. In this case, if the input/output port is in the link up state, the detecting unit 57 determines that the external device connected through a network cable inserted in the corresponding input/output port, that is, the reproducing device 2 is in the power-on state.

Alternatively, the detecting unit 57 may determine whether data communication between the network storage device and the reproducing device 2 through the first communication unit 54a is being performed. In this case, if data communication is being performed, the detecting unit 57 detects that the reproducing device 2 is in the power-on state.

The operation control unit 58 includes a communication control unit 58a and a power control unit 58b, and the communication control unit 58a performs operation control on the relay unit 56 and the whole of the communication unit 54 including the first and second communication units 54a, 54b. This operation control includes an operation of starting or stopping a communication operation using the communication unit 54. Also, the power control unit 58b performs overall operation control including an operation of starting or stopping the power supply operation using the power supply unit 55.

Moreover, if a trigger to power off the network storage device 1 is generated, the communication control unit 58a of the operation control unit 58 performs control such that the first communication unit 54a keeps operating as long as the detecting unit 57 detects that the reproducing device 2 which is an external device is in the power-on state.

Here, a trigger to power off the network storage device 1 may be a power off instruction which the user issues to power off the network storage device 1 by operating the operation input unit 52, or a power off instruction which the control unit 50 issues to power off the network storage device 1 if a predetermined condition is satisfied.

For example, in a case where the time measuring unit 61 of the control unit 50 starts to measure time when at least one of the first and second communication units 54a, 54b has stopped operating, if the measured time reaches a predetermined time, the time measuring unit generates a trigger to power off the network storage device 1. The predetermined time for the time measuring unit 61 to generate a power off trigger can be set by a user's operation on the operation input unit 52. For example, the predetermined time can be set to 1 minute, 5 minutes, and 15 minutes, in a stepwise manner. Moreover, the predetermined time can be set to 0 such that the time measuring unit 61 of the present embodiment does not start to measure time, that is, does not generate any power off instruction even though at least one of the first and second communication units 54a, 54b has stopped operating.

Also, when a trigger to power off the network storage device 1 is generated, if the detecting unit 57 detects that the reproducing device 2 which is an external device connected to the network storage device through the first communication unit 54a is in the power-on state, the power control unit 58b of the operation control unit 58 may perform control such that supply of power to the network storage device 1 through the power supply unit 55 continues.

Also, when a trigger to power off the network storage device 1 is generated, if the detecting unit 57 detects the power-on state of the reproducing device 2, which is an external device connected to the network storage device through the first communication unit 54a, the power control unit 58b of the operation control unit 58 may perform control such that the first and second communication units 54a, 54b keep operating.

Further, when a trigger to power off the network storage device 1 is generated, if the detecting unit 57 detects the power-on state of the reproducing device 2, which is an external device connected to the network storage device through the first communication unit 54a, and if the storage unit 51 serving as the setting holding unit holds setting data that causes the relay unit 56 to operate, the communication control unit 58a of the operation control unit 58 may perform control such that not only the first and second communication units 54a, 54b but also the relay unit 56 keeps operating.

Moreover, when a trigger to power off the network storage device 1 is generated, if the detecting unit 57 detects the power-on state of the reproducing device 2, which is an external device connected to the network storage device through the first communication unit 54a, and if the storage unit 51 serving as the setting holding unit holds setting data that causes the relay unit 56 not to operate, the communication control unit 58a of the operation control unit 58 may perform control such that the supply of power to the network storage device 1 through the power supply unit 55 is interrupted.

Alternatively, when a trigger to power off the network storage device 1 is generated, if the detecting unit 57 detects the power-on state of the reproducing device 2, which is an external device connected to the network storage device through the first communication unit 54a, and if the storage unit 51 serving as the setting holding unit holds setting data that causes the relay unit 56 not to operate, the communication control unit 58a of the operation control unit 58 may perform control such that the supply of power to the network storage device 1 through the power supply unit 55 continues.

Details of this operation control of the operation control unit 58 will be described below.

If a predetermined condition is satisfied, for example, if the user inputs an instruction on whether to operate the relay unit 56 by operating the operation input unit 52, the setting unit 59 stores the setting data 71 in the storage unit 51 serving as the setting holding unit, such that the setting data 71 is held in the storage unit 51.

The address setting unit 60 sets IP (Internet Protocol) addresses for the first and second communication units 54a, 54b of the communication unit 54, respectively. Also, the address setting unit 60 has a DHCP (Dynamic Host Configuration Protocol) server function, and activates a DHCP server according to an instruction from the relay unit 56, and notifies an IP address having the same network address as that of an IP address assigned to the first communication unit 54a, to the external device connected through the first communication unit 54a, that is, the reproducing device 2 of the present embodiment, thereby assigning the corresponding IP address to the corresponding device.

Further, if the detecting unit 57 detects a shift from the power-off state to the power-on state of the reproducing device 2 which is the external device connected through the first communication unit 54a, the address setting unit 60 searches, through the second communication unit 54b, for an external device having a function of setting an IP address, which is a network address capable of communication with the first communication unit 54a, to the reproducing device 2. If an external device having the IP address setting function is found, the address setting unit receives setting of an IP address by the external device; whereas if any external device having the IP address setting function is not found, the address setting unit sets an IP address capable of communication with the first communication unit 54a, to the reproducing device 2.

Moreover, if the external device having the network address setting function is found, the address setting unit 60 may switch the first communication unit 54a to the link-down state, switch the first communication unit to the link-up state again, and then allow the setting of such a network address by the corresponding external device.

The storage unit 51 has the function of storing various data at least temporarily. In the storage unit 51, the content files 70 and the setting data 71 are stored. As already described, the setting data 71 is data on setting whether to operate the relay unit 56. The specific content of the setting data 71 is arbitrary, and may be a flag defining whether to operate the relay unit 56. Therefore, the storage unit 51 serves as a setting holding unit.

In FIG. 4, the storage unit 51 stores the content files 70 and the setting data 71. However, in addition to the content files 70 and the setting data 71, other data such as document files may be stored.

The operation input unit 52 receives various data which is input from an external input device including the remote controller 40 to the network storage device 1, and inputs the various input data to the control unit 50, or store the various input data in the storage unit 51. The display unit 53 displays a display screen image on the screen of the display unit 53, based on a display screen image generation signal generated by the control unit 50.

The communication unit 54 includes the first communication unit 54a and the second communication unit 54b. The first and second communication units 54a, 54b have a first network interface 54c and a second network interface 54d, respectively. As already described, the first and second network interfaces 54c and 54d have input/output ports (not shown), and network connectors (not shown) corresponding to the input/output ports, and the reproducing device 2 and the router 6 are connected to the network connectors through network cables (not shown). The communication unit 54 transmits various data such as data of the control unit 50 and data stored in the storage unit 51 to external devices including the reproducing device 2, and receives various data from the reproducing device 2.

The power supply unit 55 is connected to an external commercial power source (not shown), and supplies a power supply voltages for operations of the individual components of the network storage device 1. In the present embodiment, the power supply unit 55 supplies electric power to the individual components (a power-on state) or does not supply electric power to the components (a power-off state) according to a command from the control unit 50.

In the above-described configuration, the function of the control unit 50, and those of the components of the control unit 50 such as the relay unit 56, the detecting unit 57, the operation control unit 58, the setting unit 59, the address setting unit 60, and the time measuring unit 61 are mainly accomplished by the CPU 20. The operation input unit 52 is equivalent to the remote controller 40 and the input/output device 23. The storage unit 51 is equivalent to the ROM 21, the RAM 22, and the HDD unit 26. The display unit 53 is equivalent to the display unit 24. The communication unit 54 is equivalent to the network interface 25. Also, the power supply unit 55 is equivalent to the power supply unit 27. Operations of the individual functional units of the network storage device 1 shown in FIG. 4 will be described below.

### (OPERATIONS OF CONTENT REPRODUCING SYSTEM)

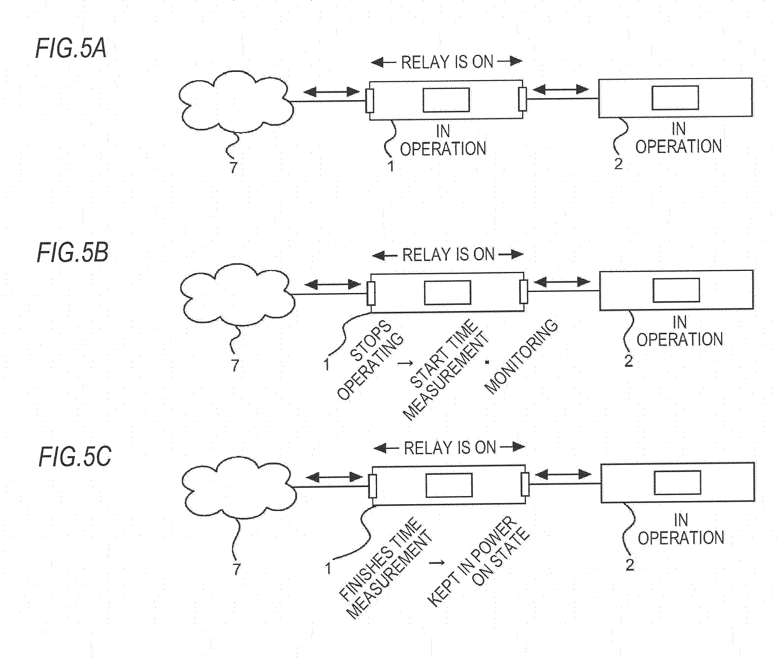

Now, with reference to FIGS. 5A to 5C, FIGS. 6A and 6B, and FIGS. 7A to 7C, the operations of the content reproducing system S of the present embodiment will be described with focus on operations of the operation control unit 58 of the network storage device 1.

FIGS. 5A to 5C are views for explaining exemplary operations of the content reproducing system of the embodiment. The operation shown in FIGS. 5A to 5C is an operation which is performed when the setting data 71 stored in the storage unit 51 serving as the setting holding unit represents that the relay unit 56 is to operate, and the relay unit 56 is performing a relaying operation based on the setting data.

First, it is assumed that the reproducing device 2 is operating as shown in FIG. 5A, for example, the reproducing device is performing an operation of reading a content file 70 from the storage unit 51 of the storage control system 1 and reproducing the read content file, or an operation of reading a content file 70 from the external server 8 existing on the WAN 7 and reproducing the read content file. In this state, since the relay unit 56 of the network storage device 1 is operating, the reproducing device 2 can access the WAN 7 through the network storage device 1. Also, the detecting unit 57 of the network storage device 1 monitors and detects the power-on state of the reproducing device 2 connected to the first network interface 54c while the network storage device 1 is in the power-on state.

In this state, it is assumed that, as shown in FIG. 5B, the network storage device 1 stops operating, and the time measuring unit 61 of the network storage device 1 starts to measure the predetermined time.

In this case, as shown in FIG. 5C, if the reproducing device 2 is in operation when the time measuring unit 61 of the network storage device 1 has finished measuring of the predetermined time, and therefore the detecting unit 57 of the network storage device 1 detects the power-on state of the reproducing device 2, the operation control unit 58 of the network storage device 1, particularly, the power control unit 58b controls the power supply unit 55 such that the power-on state of the network storage device 1 continues. As a result, the reproducing device 2 can keep the state where the reproducing device is connected to the WAN 7 through the network storage device 1.

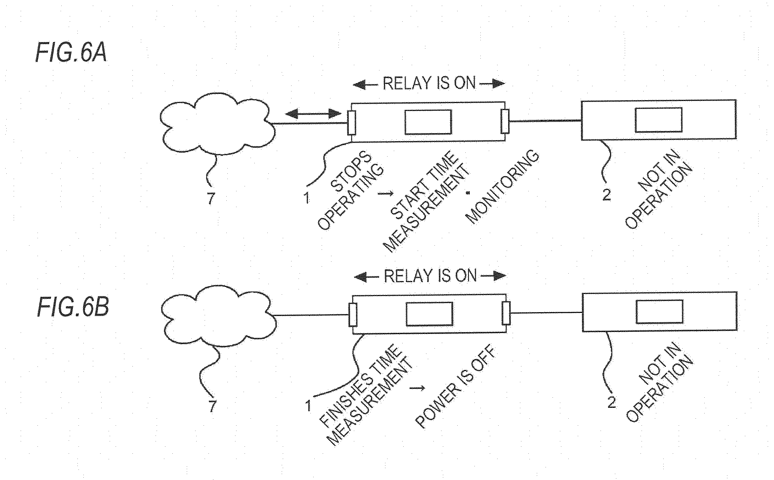

FIGS. 6A and 6B are views for explaining other exemplary operations of the content reproducing system of the embodiment. The operation shown in FIGS. 6A and 6B also is an operation which is performed when the setting data 71 stored in the storage unit 51 serving as the setting holding unit represents that the relay unit 56 is to operate, and the relay unit 56 is performing a relaying operation based on the setting data. In FIGS. 5A to 5C, the reproducing device 2 is operating. In contrast with this, in FIG. 6A and 6B, the reproducing device 2 is not operating.

First, it is assumed that, as shown in FIG. 6A, the reproducing device 2 is in the power-off state, and thus is not operating. In this state, it is assumed that the network storage device 1 stops operating, and the time measuring unit 61 of the network storage device 1 starts to measure the predetermined time.

In this case, as shown in FIG. 6B, if the reproducing device 2 is not in operation when the time measuring unit 61 of the network storage device 1 has finished measuring of the predetermined time, and therefore the detecting unit 57 of the network storage device 1 detects the power-off state of the reproducing device 2, the operation control unit 58 of the network storage device 1, particularly, the power control unit 58b controls the power supply unit 55 to deenergize, the network storage device 1. Therefore, it is possible to efficiently decrease the standby power consumption of the network storage device 1.

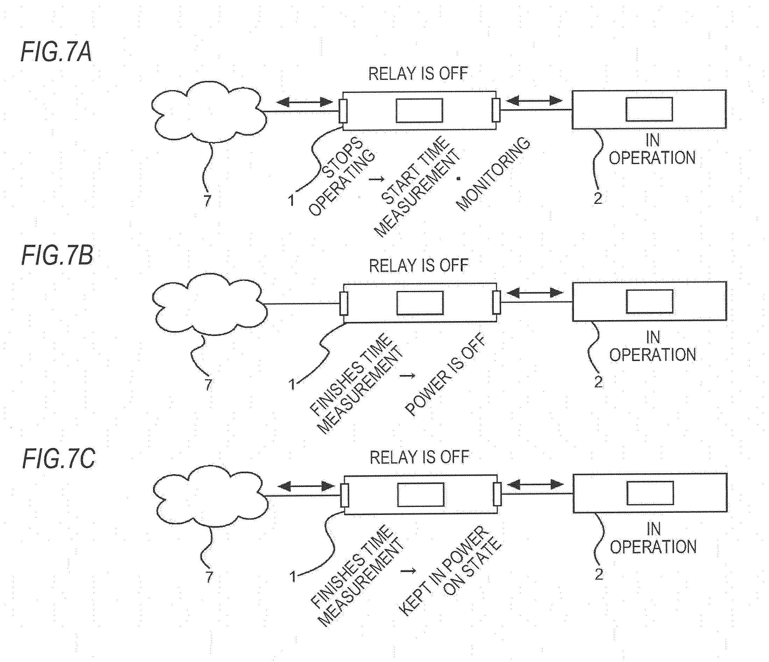

FIGS. 7A to 7C are views for explaining further exemplary operations of the content reproducing system of the embodiment. The operation shown in FIGS. 7A to 7C is an operation which is performed when the setting data 71 stored in the storage unit 51 serving as the setting holding unit represents that the relay unit 56 is not to operate, and the relay unit 56 is not performing any relaying operation based on the setting data.

First, it is assumed that the reproducing device 2 is operating as shown in FIG. 7A, for example, the reproducing device 2 is performing an operation of reading the content file 70 from the storage unit 51 of the network storage device 1 and reproducing the read content file. In the state shown in FIG. 7A, since the relay unit 56 of the network storage device 1 is not operating, the reproducing device 2 cannot access the WAN 7 through the network storage device 1. In this state, it is assumed that the network storage device 1 stops operating, and the time measuring unit 61 of the network storage device 1 starts to measure the predetermined time.

In this case, as shown in FIG. 7B, if the reproducing device 2 is in operation when the time measuring unit 61 of the network storage device 1 has finished measuring of the predetermined time, and therefore the detecting unit 57 of the network storage device 1 detects the power-on state of the reproducing device 2, the operation control unit 58 of the network storage device 1, particularly, the power control unit 58b controls the power supply unit 55 to deenergize the network storage device 1. Therefore, it is possible to efficiently decrease the standby power consumption of the network storage device 1.

After the network storage device 1 becomes the power-off state, the reproducing device 2 cannot perform some operations such as an operation of reading a content file 70 from the network storage device 1 and reproducing the read content file; however, if any content file 70 has already been read and is being reproduced, the reproducing device 2 can keep the corresponding reproducing operation.

Alternatively, as shown in FIG. 7C, if the reproducing device 2 is in operation when the time measuring unit 61 of the network storage device 1 has finished measuring of the predetermined time, and therefore the detecting unit 57 of the network storage device 1 detects the power-on state of the reproducing device 2, the operation control unit 58 of the network storage device 1, particularly, the power control unit 58b controls the power supply unit 55 such that the power-on state of the network storage device 1 continues. Then, the reproducing device 2 cannot access the WAN 7 through the network storage device 1; however, it can read a content file 70 from the network storage device 1, and reproduce the read content file.

### (OPERATIONS OF NETWORK STORAGE DEVICE)

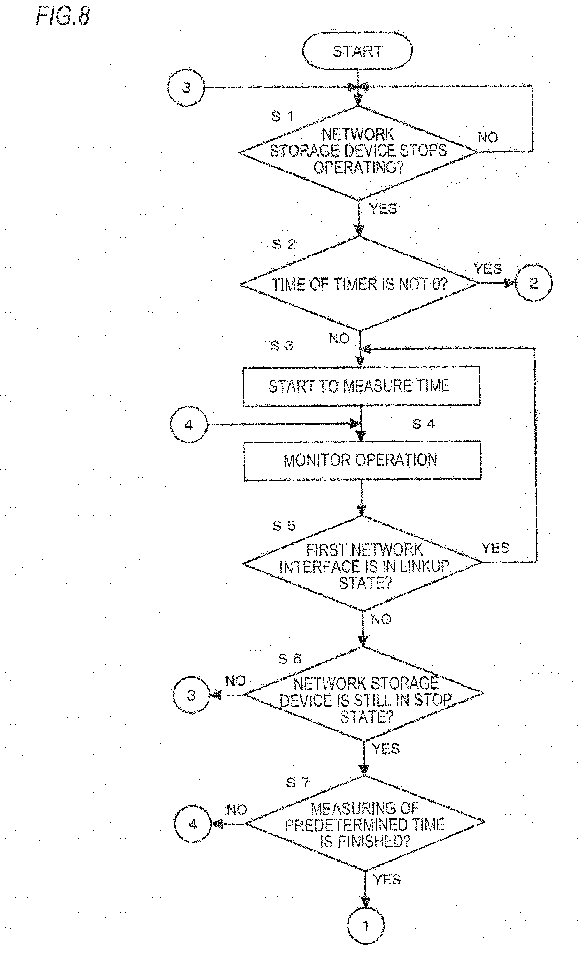

Now, operations of the network storage device 1 of the present embodiment will be described with reference to the flow charts of FIGS. 8 to 10.

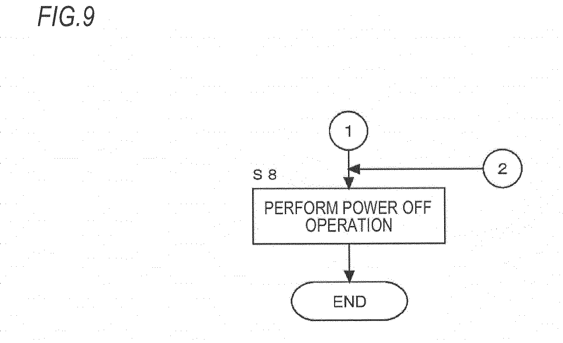

First, FIGS. 8 and 9 are flow charts for explaining exemplary operations of the network storage device 1 of the present embodiment. The operations of the network storage device 1 shown in the flow charts of FIGS. 8 and 9 correspond to the operations of FIGS. 5 and 6 already described.

The operations shown in FIGS. 8 and 9 start when the network storage device 1 is powered on, that is, when the power supply voltage is supplied to the individual components by the power supply unit 55 of the network storage device 1.

First, in STEP S1, a program waits for the network storage device 1 to stop operating. If the network storage device 1 stops operating ("YES" in STEP S1), the program proceeds to STEP S2.

Whether the network storage device 1 stops operating may be monitored and determined by the control unit 50. Specifically, in STEP S1, for example, when any external device including the reproducing device 2 is not accessing the storage unit 51 of the network storage device 1, or when the communication unit 54, preferably, the first communication unit 54a is not performing data communication, the program determines that the network storage device 1 stops operating. The time when the first communication unit 54a is not performing data communication means the time when the network storage device 1 and the reproducing device 2 are not performing data communication.

In STEP S2, the program reads data stored with respect to the predetermined time in the storage unit 51 by the time measuring unit 61 of the network storage device 1, and determines whether the predetermined time which should be measured is not 0, based on the read data. In a case where the determination result is positive ("NO" in STEP S2), the program determines that setting is performed such that the time measuring unit 61 starts a time measuring operation, and proceeds to STEP S3. Meanwhile, in a case where the determination result is negative ("YES" in STEP S2), since setting is performed such that the time measuring unit 61 does not start a time measuring operation, the program determines that it is preferable to immediately power off the network storage device 1, and proceeds to STEP S8 in which an operation of powering off the network storage device 1 is performed by the power supply unit 55.

In STEP S3, based on the data related to the predetermined time and read in STEP S2, the time measuring unit 61 starts to measure the predetermined time. In STEP S4, the detecting unit 57 starts an operation of monitoring the power supply state of the reproducing device 2. It is assumed that the detecting unit 57 performs the operation of monitoring the power supply state of the reproducing device 2 which is an operation included in the flow charts of FIGS. 8 and 9 based on whether the first network interface 54c is in a linkup state.

In STEP S5, it is determined whether the first network interface 54c is in the linkup state based on the detection result of the detecting unit 57. In a case where the determination result is positive ("YES" in STEP S5), the program determines that the reproducing device 2 is in the power-on state, and returns to STEP S3. Meanwhile, in a case where the determination result is negative ("NO" in STEP S5), the program determines that the reproducing device 2 is not in the power-on state, and proceeds to STEP S6.

In STEP S6, the control unit 50 determines whether the network storage device 1 is still in the stop state. In a case where the determination result is positive ("YES" in STEP S6), the program proceeds to STEP S7. Meanwhile, in a case where the determination result is negative ("NO" in STEP S6), the program returns to STEP S1.

In STEP S7, it is determined whether the time measuring unit 61 has finished measuring of the predetermined time. In a case where the determination result is positive ("YES" in STEP S7), the program proceeds to STEP S8. Meanwhile, in a case where the determination result is negative ("NO" in STEP S7), the program returns to STEP S4. In STEP S8, the network storage device 1 is powered off by the power supply unit 55.

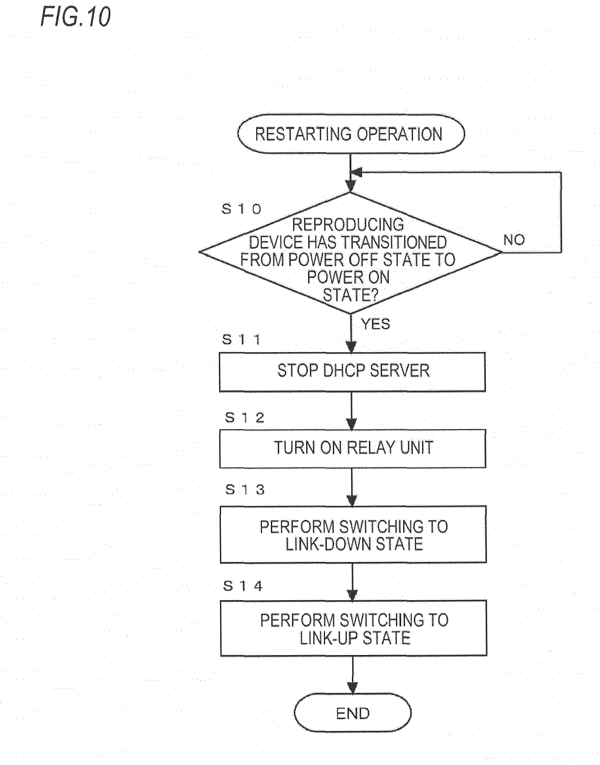

FIG. 10 is a view for explaining the restarting operation of the network storage device of the present embodiment. The operation shown in the flow chart of FIG. 10 starts when the network storage device 1 is powered on, that is, when the power supply voltage is supplied to the individual components by the power supply unit 55 of the network storage device 1.

In STEP S10, a program waits for the detecting unit 57 of the network storage device 1 to detect a shift from the power-off state to the power-on state of the reproducing device 2. If the detecting unit 57 detects the shift from the power-off state to the power-on state of the reproducing device 2 ("YES" in STEP S10), the program proceeds to STEP S11.

In STEP S11, the control unit 50 of the network storage device 1 instructs the address setting unit 60 to stop its DHCP server function. In STEP S12, at a predetermined timing after stopping of the DHCP server in STEP S11, the control unit 50 starts to operate the relay unit 56. Subsequently, in STEP S13, the address setting unit 60 switches the first network interface 54c to the link-down state (a communication disabled state). Next, in STEP S14, at a predetermined timing after switching to the link-down state in STEP S13, the address setting unit switches the first network interface 54c to the link-up state (a communication enabled state) again.

In this case, the network storage device 1 acquires an IP address to be set for the first communication unit 54a, from the DHCP server capable of communication with the network storage device 1 through the second network interface 54d, and sets the acquired IP address for the first network interface 54c.

As a result, the reproducing device 2 connected through the first network interface 54c recognizes like the reproducing device was physically disconnected and then has been physically connected again, and thus requests an IP address from the DHCP server. As a result, from the DHCP server located on a network connected to the second network interface 54d, the reproducing device 2 connected through the first network interface 54c acquires the corresponding IP address through the network storage device 1 in which the relay unit 56 is performing a relaying operation.

### (EFFECTS)

According to the network storage device 1 of the present embodiment, the detecting unit 57 monitors the power-on or power-off state of the reproducing device 2. When the reproducing device 2 is in the power-on state, if the network storage device 1 stops operating, the time measuring unit 61 starts to measure the predetermined time. Even through measuring of the time finishes, the power control unit 58b of the operation control unit 58 keeps the power-on state of the network storage device 1, unlikely a normal case where the power control unit should perform control to power off the network storage device 1. As a result, the communication unit 54 and the operation input unit 52 keep operating. Therefore, the reproducing device 2 can keep on performing various operations such as an operation of reading a content file 70 from the external server 8 existing on the WAN 7 through the network storage device 1. Therefore, according to the present embodiment, it is possible to implement the network storage device 1 capable of appropriately controlling operations of the network interfaces according to the power-on or power-off state of the reproducing device 2.

### (MODIFICATIONS)

The details of the network storage device 1 and the like of the present invention are not limited to the above-described embodiment, and various modifications are possible. In the above-described embodiment, the power supply unit 55 of the network storage device 1 supplies the power supply voltage of the whole of the network storage device 1. However, as an example, it is possible to divide the components of the network storage device 1 into a plurality of groups, and supplies a power supply voltage in units of one group.

For example, the storage unit 51, functions of the control unit 50 related to writing or reading of data in or from the storage unit 51, the operation input unit 52, and the display unit 53 may be classified into a power voltage supply group (referred to as the storage function group), and the communication unit 54 and the relay unit 56 may be classified into another power voltage supply group (referred to as the communication function group), and a power supply voltage may be individually supplied to each of the storage function group and the communication function group. In this case, the operation control unit 58 may control the power supply unit 55 such that the power supply unit individually supplies a power supply voltage to each of the storage function group and the communication function group.

Moreover, according to the detection result of the detecting unit 57, the operation control unit 58 may control the power supply unit 55 such that the power supply unit individually supplies a power supply voltage to each of the storage function group and the communication function group. For example, in a case where the detecting unit 57 detects that the reproducing device 2 is in the power-on state, the operation control unit 58 may supply a power supply voltage only to the communication function group of the network storage device 1. In other words, the operation control unit may control the power supply unit 55 such that the power supply unit interrupts supply of electric power to the storage function group of the network storage device 1. In this case, it is possible to reduce the power consumption of the network storage device 1 while making the first and second communication units 54a, 54b and the relay unit 56 keep operating such that communication between the reproducing device 2 and the WAN 7 continues. Moreover, the operation control unit 58 may perform control such that at least the first communication unit 54a keeps operating. In this case, it is possible to reduce the power consumption of the network storage device 1 while keeping communication between the reproducing device 2 and the network storage device 1.

Also, in the network storage device 1 of the present invention, if the relay unit 56 is so conditioned as not to perform a relaying operation, if the detecting unit 57 detects power-off state of the reproducing device 2, the operation control unit 58 may control the power supply unit 55 to power off the network storage device 1.

Also, in the above-described embodiment, the detecting unit 57 detects the power-on state of the reproducing device 2 based on whether the first communication unit 54a is in the link-up state or in the link-down state. However, the detecting unit may detect the power-on state of the reproducing device 2 based on the communication state of the second communication unit 54b. For example, in a case where the detecting unit 57 detects that the reproducing device 2 is performing a communication operation through the second communication unit 54b, such as an operation of accessing another device such as a PC or a server located on the LAN 5 through the second communication unit 54b of the network storage device 1, using a CIFS (Common Internet File System) protocol, or an operation of reading a content file 70 from the external server 8 located on the WAN 7, the detecting unit may detect that the reproducing device 2 is in the power-on state.

Also, in each embodiment described above, the programs for operating the network storage device 1 are stored in and provided from the ROM 16 and so on. However, the programs may be stored in a recording medium such as a digital versatile disc (DVD), an external USB storage device, or a memory card. In this case, the network storage device 1 may read the programs from the recording medium such as a DVD, and execute the read programs. Alternatively, the programs may be stored in a server located on the internet 3. In this case, the network storage device 1 may read the programs from the server, and execute the programs. Also, in each embodiment described above, the network storage device 1 includes a plurality of hardware components. However, the CPU 20 may implement operations of some of the hardware components by executing programs.

## Claims

1. A network storage device (1) including a storage unit (51) for storing data, comprising:
a first communication unit (54a) which includes a first network interface (54c);
a second communication unit (54b) which includes a second network interface (54d);
a relay unit (56) which relays communication between an external device (2) connected through the first network interface (54c) and an external device (6) connected through the second network interface (54d);
a detecting unit (57) which detects a power-on state of the external device (2) connected through the first network interface (54c);
an operation control unit (58) which, when a trigger to power off the network storage device (1) is generated, keeps the first communication unit (54a) operating if the detecting unit (57) detects the power-on state of the external device (2); **characterized by**:
a setting holding unit (51) which is configured as a storage unit to hold setting data representing whether the relay unit (56) is to operate, wherein the relay unit (56) determines whether to perform a relaying operation based on the setting data held in the setting holding unit (51), and
the operation control unit (58) is configured to, when the trigger to power off the network storage device (1) is generated, keep the first and second communication units (54a, 54b) and the relay unit (56) operating if the detecting unit (57) detects the power-on state of the external device (2) connected through the first network interface (54c) and the setting holding unit (51) holds setting data representing that the relay unit (56) is to operate, and
the operation control unit (58) is configured to, when the trigger to power off the network storage device (1) is generated, power off the network storage device (1) if the setting holding unit (51) holds setting data representing that the relay unit (56) is not to operate even when the detecting unit (57) detects the power-on state of the external device (2) connected through the first network interface (54c).

2. The network storage device (1) according to claim 1,
wherein when the trigger to power off the network storage device (1) is generated, the operation control unit (58) keeps a power-on state of the network storage device (1) if the detecting unit (57) detects the power-on state of the external device (2) connected through the first network interface (54c).

3. The network storage device (1) according to claim 1,
wherein when the trigger to power off the network storage device (1) is generated, the operation control unit (58) keeps the first and second communication units (54a, 54b) operating if the detecting unit (57) detects the power-on state of the external device (2) connected through the first network interface (54c).

4. The network storage device (1) according to any one of claims 1 to 3, further comprising:
an address setting unit (60) which, when the detecting unit (57) detects a shift from a power-off state to a power-on state of the external device (2) connected through the first network interface (54c), searches through the second network interface (54d) for an external device (6) having a function of setting, to the external device (2) connected through the first network interface (54c), a network address capable of communication with the first network interface (54c),
wherein the address setting unit (60) receives setting of a network address by the external device (6) if the external device (6) having the network address setting function is found, and
wherein the address setting unit (60) sets a network address capable of communication with the first network interface (54c) to the external device (2) connected through the first network interface (54c) if any external device (6) having the network address setting function is not found.

5. The network storage device (1) according to claim 4,
wherein if the external device (6) having the network address setting function is found, the address setting unit (60) switches the first network interface (54c) to a link-down state and switches the first network interface (54c) to a link-up state again, and then receives setting of a network address by the external device (6).

6. The network storage device (1) according to any one of claims 1 to 5, further comprising:
a time measuring unit (61) which starts to measure time when at least one of the first and second communication units (54a, 54b) stops operating, and which generates the trigger to power off the network storage device (1) if the measured time reaches a predetermined time.

7. A control method for a network storage device (1) including a storage unit (51) which stores data therein and which is configured to hold setting data representing whether a relay unit (56) is to operate, a first communication unit (54a) which includes a first network interface (54c), a second communication unit (54b) which includes a second network interface (54d), and the relay unit (56) which relays communication between external devices (2, 6) connected through the first and second communication units (54a, 54b), respectively, the control method comprising:
detecting a power-on state of the external device (2) connected through the first network interface (54c);
when a trigger to power off the network storage device (1) is generated, keeping the first communication unit (54a) operating if the power-on state of the external device (2) is detected; holding by means of the storage unit (51) setting data representing that the relay unit is to operate;
determining by means of the relay unit (56) whether to perform a relaying operation based on the setting data held in the storage unit (51);
when the trigger to power off the network storage device (1) is generated, keeping by means of an operation control unit (58) the first and second communication units (54a, 54b) and the relay unit (56) operating if a detecting unit (57) detects the power-on state of the external device (2) connected through the first network interface (54c); and
when the trigger to power off the network storage device (1) is generated, powering off the network storage device (1) if the storage unit (51) holds setting data representing that the relay unit (56) is not to operate even when the detecting unit (57) detects the power-on state of the external device (2) connected through the first network interface (54c).

8. The control method according to claim 7,
wherein the control method is performed by the network storage device (1) according to any one of claims 1 to 7.

9. A program for executing a method according to claim 7 or 8 when executed by a computer.

10. The program according to claim 9,
wherein the program when executed by the computer, causes the computer to function as the network storage device (1) according to any one of claims 1 to 6.

## Patentansprüche

1. Netzwerkspeichervorrichtung (1) beinhaltend eine Speichereinheit (51) zum Speichern von Daten, umfassend:
eine erste Kommunikationseinheit (54a), die eine erste Netzwerkschnittstelle (54c) beinhaltet;
eine zweite Kommunikationseinheit (54b), die eine zweite Netzwerkschnittstelle (54d) beinhaltet;
eine Relaiseinheit (56), die eine Kommunikation zwischen einer externen Vorrichtung (2), die über die erste Netzwerkschnittstelle (54c) verbunden ist, und einer externen Vorrichtung (6), die über die zweite Netzwerkschnittstelle (54d) verbunden ist, überträgt;
eine Detektiereinheit (57), die einen eingeschalteten Zustand der externen Vorrichtung (2), die über die erste Netzwerkschnittstelle (54c) verbunden ist, detektiert;
eine Betriebssteuereinheit (58), die, wenn ein Auslöser zum Ausschalten der Netzwerkspeichervorrichtung (1) generiert wird, die erste Kommunikationseinheit (54a) in Betrieb hält, wenn die Detektiereinheit (57) den eingeschalteten Zustand der externen Vorrichtung (2) detektiert; **gekennzeichnet durch**:
eine Einstellungsspeichereinheit (51), die als eine Speichereinheit konfiguriert ist, um Einstellungsdaten zu speichern, die darstellen, ob die Relaiseinheit (56) in Betrieb sein soll, wobei die Relaiseinheit (56) bestimmt, ob ein Relaisvorgang auf Grundlage der in der Einstellungsspeichereinheit (51) gespeicherten Einstellungsdaten durchgeführt werden soll, und
die Betriebssteuereinheit (58), die, wenn der Auslöser zum Ausschalten der Netzwerkspeichervorrichtung (1) generiert wird, dazu konfiguriert ist, die erste und die zweite Kommunikationseinheit (54a, 54b) und die Relaiseinheit (56) in Betrieb zu halten, wenn die Detektiereinheit (57) den eingeschalteten Zustand der externen Vorrichtung (2) detektiert, die über die erste Netzwerkschnittstelle (54c) verbunden ist, und die Einstellungsspeichereinheit (51) speichert Einstellungsdaten, die darstellen, dass die Relaiseinheit (56) in Betrieb sein soll, und
die Betriebssteuereinheit (58), die, wenn der Auslöser zum Ausschalten der Netzwerkspeichervorrichtung (1) generiert wird, dazu konfiguriert ist, die Netzwerkspeichervorrichtung (1) auszuschalten, wenn die Einstellungsspeichereinheit (51) Einstellungsdaten speichert, die darstellen, dass die Relaiseinheit (56) nicht in Betrieb sein soll, selbst wenn die Detektiereinheit (57) den eingeschalteten Zustand der externen Vorrichtung (2), die über die erste Netzwerkschnittstelle (54c) verbunden ist, detektiert.

2. Netzwerkspeichervorrichtung (1) nach Anspruch 1,
wobei, wenn der Auslöser zum Ausschalten der Netzwerkspeichervorrichtung (1) generiert wird, die Betriebssteuereinheit (58) einen eingeschalteten Zustand der Netzwerkspeichervorrichtung (1) aufrechterhält, wenn die Detektiereinheit (57) den eingeschalteten Zustand der externen Vorrichtung (2), die über die erste Netzwerkschnittstelle (54c) verbunden ist, detektiert.

3. Netzwerkspeichervorrichtung (1) nach Anspruch 1,
wobei, wenn der Auslöser zum Ausschalten der Netzwerkspeichervorrichtung (1) generiert wird, die Betriebssteuereinheit (58) die erste und die zweite Kommunikationseinheit (54a, 54b) in Betrieb hält, wenn die Detektiereinheit (57) den eingeschalteten Zustand der externen Vorrichtung (2), die über die erste Netzwerkschnittstelle (54c) verbunden ist, detektiert.

4. Netzwerkspeichervorrichtung (1) nach einem der Ansprüche 1 bis 3, ferner umfassend:
eine Adresseinstellungseinheit (60), die, wenn die Detektiereinheit (57) einen Übergang von einem ausgeschalteten Zustand in einen eingeschalteten Zustand der externen Vorrichtung (2), die über die erste Netzwerkschnittstelle (54c) verbunden ist, detektiert, die zweite Netzwerkschnittstelle (54d) hinsichtlich einer externen Vorrichtung (6) durchsucht, die eine Funktion aufweist, eine zur Kommunikation mit der ersten Netzwerkschnittstelle (54c) fähige Netzwerkadresse an der externen Vorrichtung (2) einzustellen, die über die erste Netzwerkschnittstelle (54c) verbunden ist,
wobei die Adresseinstellungseinheit (60) eine Einstellung einer Netzwerkadresse durch die externe Vorrichtung (6) empfängt, wenn die externe Vorrichtung (6), die die Netzwerkadresseneinstellungsfunktion aufweist, gefunden wurde, und
wobei die Adresseinstellungseinheit (60) eine zur Kommunikation mit der ersten Netzwerkschnittstelle (54c) fähige Netzwerkadresse an der externen Vorrichtung (2) einstellt, die über die erste Netzwerkschnittstelle (54c) verbunden ist, wenn eine beliebige externe Vorrichtung (6), die die Netzwerkadresseneinstellungsfunktion aufweist, nicht gefunden wird.

5. Netzwerkspeichervorrichtung (1) nach Anspruch 4,
wobei, wenn die externe Vorrichtung (6), die die Netzwerkadresseneinstellungsfunktion aufweist, gefunden wird, die Adresseneinstellungseinheit (60) die erste Netzwerkschnittstelle (54c) in einen Link-Down-Zustand schaltet und die erste Netzwerkschnittstelle (54c) nochmals in einen Link-Up-Zustand schaltet und dann die Einstellung von einer Netzwerkadresse durch die externe Vorrichtung (6) empfängt.

6. Netzwerkspeichervorrichtung (1) nach einem der Ansprüche 1 bis 5, ferner Folgendes umfassend:
eine Zeitmessungseinheit (61), die beginnt, die Zeit zu messen, wenn mindestens eine der ersten und zweiten Kommunikationseinheit (54a, 54b) aufhört zu arbeiten, und die den Auslöser generiert, um die Netzwerkspeichervorrichtung (1) auszuschalten, wenn die gemessene Zeit eine vorbestimmte Zeit erreicht.

7. Steuerverfahren für eine Netzwerkspeichervorrichtung (1), beinhaltend eine Speichereinheit (51), die Daten darin speichert, und die dazu konfiguriert ist, Einstellungsdaten, die darstellen, ob eine Relaiseinheit (56) in Betrieb sein soll, zu speichern, eine erste Kommunikationseinheit (54a), die eine erste Netzwerkschnittstelle (54c) beinhaltet, eine zweite Kommunikationseinheit (54b), die eine zweite Netzwerkschnittstelle (54d) beinhaltet, und die Relaiseinheit (56), die die Kommunikation zwischen externen Vorrichtungen (2, 6), die über die erste bzw. die zweite Kommunikationseinheit (54a, 54b) verbunden sind, überträgt, wobei das Steuerverfahren Folgendes umfasst:
Detektieren eines eingeschalteten Zustands der externen Vorrichtung (2), die über die erste Netzwerkschnittstelle (54c) verbunden ist;
wenn ein Auslöser zum Ausschalten der Netzwerkspeichervorrichtung (1) generiert wurde, in Betrieb halten der ersten Kommunikationseinheit (54a), wenn der eingeschaltete Zustand der externen Vorrichtung (2) detektiert wurde; durch die Speichereinheit (51) Speichern der Einstellungsdaten, die darstellen, dass die Relaiseinheit (56) in Betrieb sein soll;
Bestimmen anhand der Relaiseinheit (56), ob ein Relaisvorgang auf Grundlage der in der Einstellungsspeichereinheit (51) gespeicherten Einstellungsdaten durchgeführt werden soll;
wenn der Auslöser zum Ausschalten der Netzwerkspeichervorrichtung (1) generiert wurde, durch eine Betriebssteuereinheit (58) in Betrieb halten der ersten und zweiten Kommunikationseinheit (54a, 54b) und der Relaiseinheit (56), wenn eine Detektiereinheit (57) einen eingeschalteten Zustand der externen Vorrichtung (2), die über die erste Netzwerkschnittstelle (54c) verbunden ist, detektiert;
wenn der Auslöser zum Ausschalten einer Netzwerkspeichervorrichtung (1) generiert wurde, Ausschalten der Netzwerkspeichervorrichtung (1), wenn die Speichereinheit (51) Einstellungsdaten speichert, die darstellen, dass die Relaiseinheit (56) nicht in Betrieb sein soll, selbst wenn die Detektiereinheit (57) den eingeschalteten Zustand der externen Vorrichtung (2), die über die erste Netzwerkschnittstelle (54c) verbunden ist, detektiert.

8. Steuerverfahren nach Anspruch 7,
wobei das Steuerverfahren durch die Netzwerkspeichervorrichtung (1) nach einem der Ansprüche 1 bis 7 durchgeführt wird.

9. Programm zum Ausführen eines Verfahrens nach Anspruch 7 oder 8, wenn durch einen Computer ausgeführt.

10. Programm nach Anspruch 9,
wobei das Programm, wenn von dem Computer ausgeführt, den Computer dazu veranlasst, als die Netzwerkspeichervorrichtung (1) nach einem der Ansprüche 1 bis 6 zu fungieren.

## Revendications

1. Dispositif de stockage en réseau (1) comprenant une unité de stockage (51) pour le stockage de données, comprenant :
- une première unité de communication (54a) qui comporte une première interface réseau (54c) ;
- une deuxième unité de communication (54b) qui comporte une deuxième interface réseau (54d) ;
- une unité relais (56) qui transmet la communication entre un dispositif externe (2) connecté à travers la première interface réseau (54c) et un dispositif externe (6) connecté à travers la deuxième interface réseau (54d) ;
- une unité de détection (57) qui détecte un état allumé du dispositif externe (2) connecté à travers la première interface réseau (54c) ;
- une unité de commande de marche (58) qui, lorsqu'est généré un déclenchement destiné à éteindre le dispositif de stockage en réseau (1), maintient la première unité de communication (54a) en marche si l'unité de détection (57) décèle l'état allumé du dispositif externe (2) ;
**caractérisé par** :
- une unité de détention de paramètres (51) conçue en tant qu'unité de stockage destinée à détenir les données de réglage signifiant si l'unité relais (56) doit être en marche, dans lequel l'unité relais (56) détermine si une opération de relais est à réaliser sur la base des données de réglage détenues par l'unité de détention de paramètres (51), et
- en ce que l'unité de commande de marche (58) est conçue pour, lorsque le déclenchement destiné à éteindre le dispositif de stockage en réseau (1) est généré, maintenir en marche la première et la deuxième unité de communication (54a, 54b) ainsi que l'unité relais (56) si l'unité de détection (57) décèle l'état allumé du dispositif externe (2) connecté à travers la première interface réseau (54c) et si l'unité de détention de paramètres (51) détient des données de réglage signifiant que l'unité relais (56) doit être en marche, et
- que l'unité de commande de marche (58) est conçue pour, lorsque le déclenchement destiné à éteindre le dispositif de stockage en réseau (1) est généré, éteindre le dispositif de stockage en réseau (1) si l'unité de détention de paramètres (51) détient des données de réglage signifiant que l'unité relais (56) ne doit pas être en marche même lorsque l'unité de détection (57) décèle l'état allumé du dispositif externe (2) connecté à travers la première interface réseau (54c).

2. Dispositif de stockage en réseau (1) selon la revendication 1,
dans lequel lorsque le déclenchement destiné à éteindre le dispositif de stockage en réseau (1) est généré, l'unité de commande de marche (58) maintient un état allumé du dispositif de stockage en réseau (1) si l'unité de détection (57) décèle l'état allumé du dispositif externe (2) connecté à travers la première interface réseau (54c).

3. Dispositif de stockage en réseau (1) selon la revendication 1,
dans lequel lorsque le déclencheur destiné à éteindre le dispositif de stockage en réseau (1) est généré, l'unité de commande de marche (58) maintient la première et la deuxième unité de communication (54a, 54b) en marche si l'unité de détection (57) décèle l'état allumé du dispositif externe (2) connecté à travers la première interface réseau (54c).

4. Dispositif de stockage en réseau (1) selon l'une quelconque des revendications 1 à 3, comprenant en outre :
- une unité de définition d'adresse (60) qui, lorsque l'unité de détection (57) décèle un passage d'un état éteint à un état allumé du dispositif externe (2) connecté à travers la première interface réseau (54c), cherche à travers la deuxième interface réseau (54d) un dispositif externe (6) ayant une fonction permettant de définir, sur le dispositif externe (2) connecté à travers la première interface réseau (54c), une adresse réseau susceptible de communiquer avec la première interface réseau (54c),
dans lequel l'unité de définition d'adresse (60) reçoit du dispositif externe (6) une définition d'une adresse réseau si le dispositif externe (6) ayant la fonction permettant de définir une adresse réseau est trouvé, et
dans lequel l'unité de définition d'adresse (60) définit une adresse réseau susceptible de communiquer avec la première interface réseau (54c), sur le dispositif externe (2) connecté à travers la première interface réseau (54c) si un quelconque dispositif externe (6) ayant la fonction de définir une adresse réseau n'est pas trouvé.

5. Dispositif de stockage en réseau (1) selon la revendication 4,
dans lequel si le dispositif externe (6) ayant la fonction de définir une adresse réseau est trouvé, l'unité de définition d'adresse (60) commute la première interface réseau (54c) dans un état déconnecté et commute la première interface réseau (54c) dans un état reconnecté, puis reçoit du dispositif externe (6) la définition d'une adresse réseau.

6. Dispositif de stockage en réseau (1) selon l'une quelconque des revendications 1 à 5, comprenant en outre :
- une unité de mesure de durée (61) qui commence à mesurer la durée lorsqu'au moins une de la première et de la deuxième unité de communication (54a, 54b) arrête de fonctionner, et qui génère le déclenchement destiné à éteindre le dispositif de stockage en réseau (1) si la durée mesurée atteint une durée prédéfinie.

7. Procédé de commande pour un dispositif de stockage en réseau (1) comportant une unité de stockage (51) qui y stocke des données et qui est conçue pour détenir des données de réglage signifiant si une unité relais (56) doit être en marche ou non, une première unité de communication (54a) qui comporte une première interface réseau (54c), une deuxième unité de communication (54b) qui comporte une deuxième interface réseau (54d), et l'unité relais (56) qui transmet la communication entre des dispositifs externes (2, 6) connectés respectivement à travers la première et la deuxième unité de communication (54a, 54b), le procédé de commande comprenant :
- la détection d'un état allumé du dispositif externe (2) connecté à travers la première interface réseau (54c) ;
- lorsqu'est généré un déclenchement destiné à éteindre le dispositif de stockage en réseau (1), le maintien en marche de la première unité de communication (54a) si l'état allumé du dispositif externe (2) est décelé ; la détention, à l'aide de l'unité de stockage (51), des données de réglage signifiant que l'unité relais doit être en marche ;
- la détermination, à l'aide de l'unité relais (56), si une opération de relais est à réaliser ou non sur la base des données de réglage détenues par l'unité de stockage (51) ;
- lorsque le déclenchement destiné à éteindre le dispositif de stockage en réseau (1) est généré, maintien en marche, à l'aide d'une unité de commande de marche (58), de la première et de la deuxième unité de communication (54a, 54b) ainsi que de l'unité relais (56) si une unité de détection (57) décèle l'état allumé du dispositif externe (2) connecté à travers la première interface réseau (54c);
- lorsque le déclenchement destiné à éteindre le dispositif de stockage en réseau (1) est généré, extinction du dispositif de stockage en réseau (1) si l'unité de stockage (51) détient des données de réglage signifiant que l'unité relais (56) ne doit pas être en marche même lorsque l'unité de détection (57) décèle l'état allumé du dispositif externe (2) connecté à travers la première interface réseau (54c).

8. Procédé de commande selon la revendication 7,
dans lequel le procédé de commande est mis en oeuvre par le dispositif de stockage en réseau (1) selon l'une quelconque des revendications 1 à 7.

9. Programme de mise en oeuvre d'un procédé selon la revendication 7 ou 8 lorsqu'il est mis en oeuvre par un ordinateur.

10. Programme selon la revendication 9,
dans lequel le programme, lorsqu'il est exécuté par l'ordinateur, fait que l'ordinateur fonctionne en tant que dispositif de stockage en réseau (1) selon l'une quelconque des revendications 1 à 6.
